(19) Europäisches Patentamt
European Patent Office
Office européen des brevets

(11) EP 2 501 653 B1

(12) EUROPÄISCHE PATENTSCHRIFT

(45) Veröffentlichungstag und Bekanntmachung des Hinweises auf die Patenterteilung:
09.08.2017 Patentblatt 2017/32

(21) Anmeldenummer: 10787333.3

(22) Anmeldetag: 19.11.2010

(51) Int Cl.:
C01B 33/16 (2006.01)    C01B 33/158 (2006.01)

(86) Internationale Anmeldenummer:
PCT/EP2010/067823

(87) Internationale Veröffentlichungsnummer:
WO 2011/061290 (26.05.2011 Gazette 2011/21)

(54) **VERFAHREN ZUR HERSTELLUNG EINES PORÖSEN SIO2-XEROGELS MIT CHARAKTERISTISCHER PORENGRÖSSE DURCH EIN BOTTOM-UP-VERFAHREN ÜBER EINE VORSTUFE MIT ORGANISCHEN FESTKÖRPERSKELETTSTÜTZEN**

METHOD FOR PRODUCING A POROUS SIO2 XEROGEL WITH A CHARACTERISTIC PORE SIZE BY MEANS OF A BOTTOM-UP METHOD USING A PRECURSOR THAT HAS ORGANIC SOLID SKELETAL SUPPORTS

PROCÉDÉ DE PRÉPARATION D'UN XÉROGEL DE SIO2 POREUX AYANT UNE TAILLE DE PORES CARACTÉRISTIQUE AU MOYEN D'UN PROCESSUS BOTTOM-UP À L'AIDE D'UN PRÉCURSEUR PRÉSENTANT DES SUPPORTS DE SQUELETTE SOLIDE ORGANIQUES

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR

(30) Priorität: 19.11.2009 DE 102009053784

(43) Veröffentlichungstag der Anmeldung:
26.09.2012 Patentblatt 2012/39

(73) Patentinhaber:
• BSH Hausgeräte GmbH
81739 München (DE)
• Bayerisches Zentrum Für Angewandte Energieforschun E.V.
97074 Würzburg (DE)

(72) Erfinder:
• EBERT, Hans-Peter
97338 Dettelbach (DE)
• NOISSER, Theresa
97076 Würzburg (DE)
• REICHENAUER, Gudrun
97218 Gerbrunn (DE)
• WEIGANG, Lena
97074 Würzburg (DE)

(74) Vertreter: Lang, Michael
BSH Hausgeräte GmbH
Zentralabteilung Gewerblicher Rechtsschutz
Carl-Wery-Str. 34
81739 München (DE)

(56) Entgegenhaltungen:
WO-A1-98/05591    DE-A1- 19 721 600
FR-A1- 2 833 936

• LARSEN GUSTAVO ET AL: "Amine dendrimers as templates for amorphous silicas", JOURNAL OF PHYSICAL CHEMISTRY. B, MATERIALS, SURFACES, INTERFACES AND BIOPHYSICAL, WASHINGTON, DC, US, Bd. 104, Nr. 20, 1. Januar 2000 (2000-01-01), Seiten 4840-4843, XP002213390, ISSN: 1089-5647, DOI: DOI:10.1021/JP000301V

## Beschreibung

Gegenstand dieser Erfindung ist ein Verfahren zur Herstellung eines porösen $SiO_2$-Xerogels mit charakteristischer Porengröße kleiner 1 Mikrometer unter Einsatz von temporären organischen Festkörperskelettstützen, die am Ende des Herstellungsprozesses oxidativ thermisch entfernt werden, über einen Sol-Gel-Prozess mit unterkritischer Trocknung des Gels. Die zusätzlichen organischen Partikel bzw. Makromoleküle im anorganischen Gel verhindern ein Kollabieren des anorganischen Netzwerkes während des unterkritischen Trocknungsprozess. Anschließend werden diese organischen Festkörperskelettstützen durch Temperaturbehandlung oberhalb von 300°C weitestgehend oxidativ entfernt. Ergebnis ist ein $SiO_2$-Xerogel (mit einem Massenanteil an Fasern < 5 Gew%) mit einer Porosität > 80%, einem Kohlenstoff-Anteil kleiner als 10%, der nicht oder nur schwach chemisch an das silikatische Gerüst gebunden ist, und Poren im Bereich kleiner 1 Mikrometer.

## [Stand der Technik]

Aerogele, Kryogele und Xerogele kommen in vielen Bereichen zur Anwendung. Grundsätzlich unterscheiden sich die genannten Materialien durch die Art der Trocknungsmethode. Aerogel ist ein Überbegriff für alle Gele mit einem geringen Feststoffanteil, deren Poren mit Luft gefüllt sind, im engeren Sinn definieren sie sich jedoch durch eine überkritische Trocknung, Kryogele durch Gefriertrocknung und Xerogele durch konvektive unterkritische Trocknung. Bei dem vorliegenden erfindungsgemäßen Aerogel handelt es sich also genau genommen durchgehend um ein Xerogel.

Durch ihre äußerst geringen Dichten und ihre hohen Porositäten von typischerweise 85% und mehr sind Silica-Aerogele hervorragende Dämmmaterialien, die man im Gegensatz zu organischen Materialien auch bei hohen Temperaturen einsetzen kann. Bei nichtevakuierten Materialien würden organische Anteile oberhalb von 250°C mit dem in der Luft vorhandenem Sauerstoff verbrennen.

Die Herstellung hochporöser Festkörper über Sol-Gel-Verfahren benötigt normalerweise einen überkritischen Trocknungsschritt, um die Porenstruktur zu erhalten. Diese Trocknung ist zum einen zeit- und ressourcenaufwändig, da das Lösungsmittel in den Poren im Allgemeinen zunächst getauscht werden muss. Zum anderen ist sie energieaufwändig, da in Autoklaven bei hohem Druck gearbeitet wird. Prozesstechnisch ungünstig ist die Prozessierung im Autoklaven auch aufgrund der nichtkontinuierlichen Verarbeitung (Batch-Prozess). Konvektive Trocknung bei 1 bar (unterkritische Trocknung) führt durch die auftretenden großen Kapillarkräfte zum Kollabieren des Porengerüsts, weshalb monolithische Materialien mit hoher Porosität nur schwer herzustellen sind. Deshalb weisen Xerogele höhere Dichten und daher auch weniger gute Wärmedämmeigenschaften als Aerogele auf.

Das in [WO2005068361] hergestellte Aerogel muss überkritisch getrocknet werden und ist somit kostspielig und aufwändig in der Herstellung.

Um die überkritische Trocknung zu umgehen und trotzdem geringe Dichten zu erhalten, gibt es einige allgemeine Ansätze. Einarsud et al. haben ein Verfahren entwickelt, das die Schrumpfung bei der unterkritischen Trocknung durch ein Versteifen des Gelgerüstes im Nassgel verringert [Einarsrud, M.A., E. Nilsen, A. Rigacci, G.M. Pajonk, S. Buathier, D. Valette, M. Durant, B. Chevalier, P. Nitz, and F. Ehrburger-Dolle, Strengthening of silica gels and aerogels by washing and aging processes. Journal of Non-Crystalline Solids, 2001. 285, 1-7.2001]. Allerdings wird mit diesem Verfahren trotz niedriger Dichte des resultierenden Xerogels die Festkörperwärmeleitung erhöht, da lokal die Kontakte zwischen den Silica-Partikeln im Gelgerüst systematisch erhöht werden. Weiterer Nachteil sind die zusätzlich erforderlichen Verfahrensschritte, die zwei zeitaufwändige Lösungsmittelaustauschschritte beinhalten und die langen Zeiten, die für eine rissfreie Trocknung makroskopischer Formkörper erforderlich sind.

Um eine Nachvernetzung der Oberflächen-Hydroxygruppen (bei der Komprimierung des Gels durch die Kapillarkräfte) während des Trocknens und damit eine irreversible Schrumpfung zu verhindern, können wie in [EP0690023A2], [WO001998005591A1] oder [WO001996022942A1] diese Gruppen mit einem Silylierungsmittel umgesetzt werden. Diese Methode bedeutet jedoch immer einen weiteren langwierigen Lösungsmitteltausch und einen weiteren Syntheseschritt und verhindert nicht die große temporäre Schrumpfung der Probe bei der unterkritischen Trocknung, die insbesondere bei Formkörpern mit Abmessungen im cm-Bereich und größer leicht zu Rissbildungen führen kann oder eine sehr langsame Trocknung erfordert. Diese silylierten, hydrophobierten Gele sind nicht bei Anwendungstemperaturen über 250°C einsetzbar, da sonst die organischen Oberflächengruppen zerstört werden und somit auch der gewünschte Effekt, wie z.B. die Hydrophobie bei [WO001998005591A1], zerstört wird.

LARSEN GUSTAVO ET AL: "Amine dendrimers as templates for amorphous silicas" of-fenbart einen Prozess für die Herstellung von Xerogelen, bei dem Amin-Dendrimere als Vorlage benutzt werden.

Journal of Physical Chemistry. B, Materials, Surfaces, Interfaces and Biophysical, Washington, DC, US Bd. 104, Nr. 20, 1. Januar 2000 (2000-01-01), Seiten 4840-4843, XP002213390, ISSN: 1089-5647, DOI: DOI:10.1021/JP000301V, DE 197 21 600 A1, WO 98/05591 A1 und FR 2 833 936 A1 beschreiben weitere Herstellungsprozesse von Xerogelen.

**[Aufgabe der Erfindung]**

Aufgabe der Erfindung ist die Herstellung eines porösen SiO2-Xerogels, welches sowohl die geringe Dichte eines Aerogels aufweist und somit auch eine entsprechend niedrige Wärmeleitfähigkeit besitzt als auch bei Temperaturen oberhalb 300°C zur Anwendung kommen kann und welches eine gute mechanische Stabilität aufweist (E-Modul größer als 5 MPa). Die Herstellung erfolgt durch unterkritische Trocknung.

Um bei Xerogelen, also unterkritisch getrockneten Gelen, eine geringe Dichte und eine niedrige Wärmeleitfähigkeit zu erreichen, wird erfindungsgemäß ein Zwischenprodukt bzw. eine Vorstufe, d.h. ein $SiO_2$-Xerogel mit kugelähnlichen, organischen Partikeln im $SiO_2$-Netzwerk hergestellt. Als organische Komponente wird im nachfolgenden eine Komponente bezeichnet, die einen Aschegehalt kleiner als 20 Gew.% aufweist.

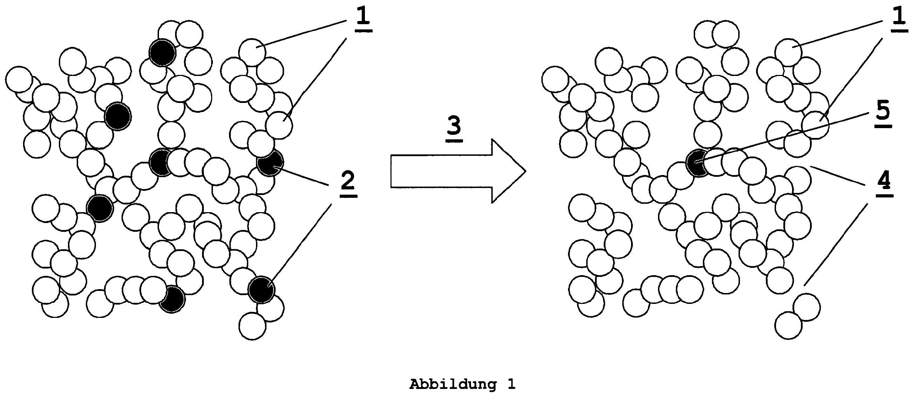

In Abbildung 1 ist schematisch das anorganische Netzwerk (1) mit den organischen Komponenten als Festkörperskelettstützen (2) gezeigt. Die Partikelgröße muss dabei im Bereich der $SiO_2$-Partikel sein (Abbildung 1; links).

Durch einen angeschlossenen Oxidationsschritt (3) werden diese organischen Anteile weitestgehend aus dem Festkörperskelett entfernt (Abbildung 1; rechts). Durch Oxidation gebildete Fehlstellen sind mit (4) gekennzeichnet, verbleibende, da nicht über Oxidation entfernte nichtsilikatische Komponenten sind mit (5) gekennzeichnet.

Aerogele bestehen aus dreidimensional vernetzten Ketten von kugelähnlichen Primärpartikeln im Nanometerbereich. Die Gesamtwärmeleitfähigkeit in Silica-Aerogelen wird von drei Faktoren bestimmt: Gas-, Strahlungs- und Festkörperwärmeleitung. Da Silica-Aerogele für IR-Strahlung nahezu vollständig durchsichtig sind, ist der Wärmeübertrag durch Strahlung gerade bei höheren Temperaturen für diese nicht zu vernachlässigen ($\sim T^3$). Durch die Zugabe bzw. Integration von Trübungsmitteln (= Pigmenten) oder durch die Verwendung von Berandungen mit niedriger Strahlungsemission (low-e-Berandungen) lässt sich dieser Beitrag ausreichend reduzieren. Aerogele und Xerogele besitzen im Allgemeinen eine hohe optische Transparenz. Für Anwendungen, die keine optische Durchlässigkeit erfordern, wie opake Dämmungen, kann gezielt auf die optische Transparenz verzichtet werden; die Einbringung von Komponenten, die die Durchlässigkeit des Stoffes im Infraroten Wellenlängenbereich reduzieren und damit auch den Wärmetransport über Strahlung vermindern, hat i. a. auch eine optische Trübung des Stoffes über Absorption oder Streuung zur Folge. Damit der Strahlungstransport effektiv unterdrückt wird, werden erfindungsgemäß Xerogele mit geringer Transparenz auch im sichtbaren Spektralbereich bevorzugt.

Der Beitrag der Gaswärmeleitung entsteht durch Wärmeübertragung bei Stößen der Gasmoleküle in den Poren untereinander. Bei Porendurchmessern unter 1 Mikrometer kann man diesen Beitrag stark reduzieren, da mit abnehmender Porengröße die Wahrscheinlichkeit für Stöße der Gasmoleküle untereinander abnimmt. Mit abnehmender Porengröße nehmen bei gegebener Dichte des Gelgerüsts aufgrund von Kapillarkräften die Schrumpfung der Probe bei der unterkritischen Trocknung und damit auch die Dichte des resultierenden Xerogels zu. Die größere Dichte des Materials erhöht den Beitrag der Festkörperleitung. Das Ziel ist also Porengrößen kleiner als 1000 nm nach Möglichkeit sogar kleiner als 300 nm im Material zu generieren und trotz unterkritischer Trocknung und Verzicht auf Lösungsmittelaustausch ein Aerogel hinreichend kleiner Dichte (kleiner als 400 kg/m$^3$) zu erhalten. Um dem Kapillardruck beim unterkritischen Trocknen standzuhalten und somit ein Kollabieren des Netzwerkes oder einer irreversiblen Schrumpfung entgegenzuwirken, wird erfindungsgemäß eine organische, kugelähnliche Komponente (Anteil kleiner als 20 Gew.-%) als mechanische Stütze in den Ketten des Silica-Netzwerks benötigt.

Die vorliegende Erfindung betrifft ein Xerogel, welches aus einer silikatischen Verbindung, z.B. einem Siliciumalkoxid (z.B. TMOS oder TEOS) oder Wasserglas in saurem oder basischem Milieu hergestellt wird und welchem in der Ausgangslösung oder der Sol-Phase entsprechende organische Bestandteile, wie beispielsweise organische Makromoleküle (z.B. Kohlenwasserstoffe, Epoxide, Amine, Polyester, Polyimide, Polyurethane, Proteine), in situ generiert werden. Dadurch wird eine gleichmäßige Verteilung der Bestandteile über das gesamte Material gewährleistet. Während der Gelierung wird das $SiO_2$-Netzwerk (1) zusammen mit den organischen Partikeln (2) gebildet. Daher sind diese kugelähnlichen Partikel (2) chemisch an das Netzwerk (1) gebunden. Diese kugelähnlichen organischen Partikel dienen als temporäre Festkörperskelettstützen und werden nach der Trocknung des Gels oxidativ entfernt (3), wodurch Fehlstellen (4) in einer einstellbaren Größe im anorganischen Netzwerk entstehen. Diese organischen Stützen, die die mechanische Stabilität des Xerogels während des Trocknungsprozesses gewährleisten, erniedrigen durch ihr Fehlen nach dem Ausbrennen den Anteil der Festkörperwärmeleitung im Silica-Xerogel, da kein Festkörperwärmeübertrag an diesen Stellen mehr stattfindet. Gleichzeitig trägt ein durch Pyrolyse aus den organischen Partikeln entstandener geringer Kohlenstoff-Rest (5) (< 10%) im Material, der trotz Temperaturbehandlung nicht aus dem $SiO_2$-Netzwerk zu entfernen ist oder gezielt dort verbleibt, zu einer IR-Trübung des Materials bei. Dies führt zu einer Reduktion der Strahlungswärmeleitung, die gerade bei hohen Temperaturen in Silica-Xerogelen einen nicht unerheblichen Beitrag von beispielsweise 30 % bis 50 % bei 0 °C bis zu 90% bei 170 °C zur Gesamtwärmeleitfähigkeit leistet.

Die Herstellung des $SiO_2$-Xerogels mit organischen Partikeln im Netzwerk erfolgt hier erfindungsgemäß über ein "Bottom-Up"-Verfahren.

In "Bottom-Up"-Verfahren wird von molekularen Vorstufen ausgegangen und die gewünschten Partikel in situ aufgebaut. Zur mechanischen Stütze des Gerüstes wird hier ein organisches Polymer in situ in das Netzwerk aufgebaut. Der Ausgangslösung oder der flüssigen, anorganischen Sol-Phase werden die entsprechenden organischen Monomere und Zusätze beigemischt. Die Monomere werden so gewählt, dass eine gute Löslichkeit gewährleistet ist. Dies geschieht entweder durch die geeignete Wahl der Monomere oder indem Linkergruppen eingesetzt werden, um das synthetisierte Polymer kovalent an das Netzwerk zu binden. Dies wird erfindungsgemäß dadurch erreicht, dass die Oberfläche der Silica-Sol-Partikel in situ mit entsprechenden funktionellen Gruppen versehen wird. Setzt man die in situ generierten, modifizierten organischen Partikel mit einem einfachen Silica-Precursor wie beispielsweise TEOS oder TMOS um, bilden sich entsprechende Ketten aus anorganischen Primärpartikeln im Wechsel mit organischen Partikeln, die Stabilität des Gelgerüstes wird durch zusätzliche organisch-anorganische Vernetzung erhöht. Zusätzliche Pigmente können sowohl während des Sol-Gel-Prozesses als auch nachträglich in das Nassgel eingebracht werden.

Nach der Synthese und der unterkritischen Trocknung des Materials vor der nachfolgenden Temperaturbehandlung liegt nun ein anorganisches Xerogel mit organischen Partikeln im Netzwerk vor. Die Dichte dieses Xerogels liegt zwischen $150 \text{ kg/m}^3$ und $600 \text{ kg/m}^3$ und der temporäre Volumenanteil von organischen Partikeln beträgt zwischen 10% und 60%. Erfindungsgemäß wird das Xerogel einer Temperaturbehandlung oberhalb 300°C unterzogen. Bei diesem angeschlossenen Verfahrensschritt werden die organischen Partikel aus den Gelgerüst weitestgehend entfernt und hinterlassen somit Fehlstellen im Festkörperskelett, welche durch Reduktion der Festkörperleitung wesentlich zu einer Senkung der Gesamtwärmeleitfähigkeit beitragen.

Das erfindungsgemäß hergestellte Silica-Xerogel zeigt folgende Eigenschaften:

Die Porengrößen liegen zwischen 1000 nm und 50 nm, die Dichte liegt zwischen $400 \text{ kg/m}^3$ und $100 \text{ kg/m}^3$. Die Bestimmung der mittleren Größe d der Poren erfolgt aus der makroskopischen Dichte des Xerogels $p$ und der spezifischen externen Oberfläche $S_{ext}$. Dabei wird $S_{ext}$ als Differenz der spezifischen Oberfläche nach dem BET-Verfahren $S_{BET}$ (ISO 9277:1995 und DIN 66135-2:2001-06) und der spezifischen Mikroporenoberfläche $S_{Mik}$ (ISO15901-3) berechnet; damit ergibt sich d zu $d=4. (1/\rho-1/\rho_{Sio2})/S_{ext}$. Dabei ist p die makroskopische Dichte des Formkörpers und $\rho_{Sio2}$ die Dichte von unporösem amorphem $SiO_2$-Glas ($=2,2 \text{ g/cm}^3$). Bei bimodalen Porenverteilungen, bei denen der Durchmesser einer Gruppe von Poren unter 100 nm liegt, wird die Porenverteilung der Poren < 100 nm mit BJH-Analyse der Stickstoffsorptionsisothermen nach DIN 66134 Norm (1998-02) bestimmt; der entsprechende Mittelwert wird als d" bezeichnet. Die mittlere Größe der Poren > 100 nm d' ergibt sich aus der Differenz von Gesamtporenvolumen $V_{P,Gesamt} = (1/\rho-1/\rho_{Sio2})$und dem Porenvolumen Vp, <100 der Poren kleiner 100 nm, das nach der Gurvich-Regel aus der gemessenen Isotherme bestimmt wird, sowie der Differenz von externer Oberfläche $S_{ext}$ und der externen Oberfläche der Poren kleiner 100 nm $S_{ext, <100} = 4^* (V_{p,<100}) / d'$ zu

$$d=4 \cdot ( V_{P,Gesamt} - V_{p,<100} ) / (S_{ext} - S_{ext,<100} ) .$$

Bei bimodalen Verteilungen mit Poren > 100 nm wird die Verteilung mit Hilfe von Quecksilberporosimetrie (ISO 15901-1) bestimmt.

Die Rosseland-gemittelte IR-Extinktion beträgt bei 300 K mindestens $50 \text{ m}^2\text{/g}$ ohne Pigmente und mindestens $80 \text{ m}^2\text{/kg}$ mit Pigmenten (spektrales Mittelungsintervall von $1,4 \text{ }\mu\text{m}$ bis $35,0 \text{ }\mu\text{m}$). Der Wert wird durch Bestimmung der direkthemisphärischen Transmission und Reflexion im Wellenlängenbereich von $1,4 \text{ }\mu\text{m}$ bis $35,0 \text{ }\mu\text{m}$ ermittelt.

Die mechanische Stabilität zeichnet sich durch ein E-Modul > 5 MPa aus. Der E-Modul kann entweder über ein statisches Verfahren bestimmt werden bei dem die relative Längenänderung ΔL/L der Probe bei uni-direktionalem Druck p Bestimmt wird:

$$E = \frac{p}{\Delta L / L}$$

Alternativ kann der E-Modul aus der Schallgeschwindigkeit v nach $E = v^2\rho$ mit der Dichte $\rho$ berechnen. Beispiele für E-Module und Porendurchmesser der erfindungsgemäßen $SiO_2$-Xerogele sind in **Fehler! Verweisquelle konnte nicht gefunden** werden. und **Fehler! Verweisquelle konnte nicht gefunden werden.** gezeigt.

**[Beispiele]**

Für das erfindungsgemäße Verfahren eignen sich prinzipiell alle in polar protischen Lösemitteln (vorzugsweise Mischungen von Wasser und einem Alkohol, hier vorzugsweise Ethanol) löslichen Polymer-, Polykondensat-, oder Polyadduktvorstufen (= Monomere) bzw. Copolymer-, Cokondensat- oder Coadduktvorstufen, die hierin vernetzt werden können, z.B. Monomere für Resorcin-Formaldehydharze, Kohlenwasserstoffe, Epoxide, Amine, Polyester, Polyimide, Polyurethane oder Proteine.

Vorzugsweise werden Monomere oder deren Gemische ausgewählt, die durch Einstellung des pH-Wertes und der Temperatur im gleichen Bereich wie das anorganische Netzwerk polymerisieren bzw. -kondensieren.

Zusätze sind neben Katalysatoren alle Stoffe, die die Dispergierbarkeit oder Löslichkeit der organischen Polymerpartikel bzw. der Kohlenstoffpartikel durch physikalische oder chemische Bindungen erhöhen, z.B. auch Lösungsvermittler und im Falle radikalischer Polymerisation auch Radikalstarter.

"Organische Polymervorstufen oder deren Gemische" bezeichnet somit alle Komponenten, die zur Ausbildung eines Polymernetzwerkes in polar protischen Lösemitteln notwendig sind.

Beim dem vorliegenden, erfindungsgemäßen Verfahren werden die benötigten organischen Polymerpartikel in der Reaktionslösung durch Monomere aufgebaut und liegen daher schon dispergiert vor. In der Mischung enthaltene Siliciumverbindungen, z.B. Siliciumalkoxide der allgemeinen Formel $Si(OR)_4$ (mit R = organischer Rest) oder Wasserglas (nach Abtrennen der Kationen durch einen Ionentauscher) bilden mit Wasser in saurem oder basischem Milieu ein $SiO_2$-Netzwerk. Durch Siliciumalkoxide der allgemeinen Formel $R_nSi(OR')_{4-n}$ (mit n=0-3; R, R' = organischer Rest), die als Linker zwischen der organischen und der silicatischen Phase dienen, werden die organischen Partikel direkt in das anorganische Netzwerk eingebaut. Das erhaltene Nassgel wird bei 1 bar getrocknet und die organische Phase durch Temperaturbehandlung oberhalb von 300°C entfernt.

Ausführungsbeispiel:

Neopentylglycol-diglycidylether wird in Ethanol unter Rühren mit Diethylentriamin bei 50°C umgesetzt. Anschließend wird 3-Glycidyloxypropyltrimethoxysilan (GLYMO) zugegeben und die Reaktionsmischung bei 50°C gerührt. Zu der Reaktionsmischung wird nach Abkühlen Wasser und eine 0,05 molare Ammoniumhydroxidlösung gegeben und bei 20°C weiter gerührt.

Danach wird Tetraethoxysilan (TEOS) zugesetzt, noch kurz gerührt und die Mischung in geschlossene Gefäße bei 30°C zur Gelierung gegeben. Nach Ende der Gelierung wird der gebildete Monolith für 7 Tage in Ethanol gelegt und anschließend bei 1 bar Umgebungsdruck und 30°C getrocknet. Das erhaltene Xerogel wird nun unter Schutzgasatmosphäre (Argon) bei 550°C pyrolysiert und anschließend bei 550°C und sauerstoffhaltiger Atmosphäre erhitzt.

**[Bezugszeichenliste]**

| | |
|---|---|
| <u>1</u> | $SiO_2$-Gerüst |
| <u>2</u> | organische Komponente |
| <u>3</u> | Verbrennungsvorgang der organischen Bestandteile |
| <u>4</u> | erhalten gebliebene Fehlstelle |
| <u>5</u> | verbliebene kohlenstoffhaltige Komponente |

**[Literatur]**

[WO001998005591A1]

[EP0690023A2]

[DE3346180C2]

[WO2005068361]

**Patentansprüche**

**1.** Verfahren zur Herstellung eines $SO_2$-Xerogels mit Poren im Bereich von 1000 nm bis 50 nm, einer Dichte kleiner als 400 kg/m$^3$, **dadurch gekennzeichnet, dass** das $SiO_2$-Xerogel über einen Sol-Gel-Prozess aus einer Siliciumverbindung, insbesondere Wasserglas, Kieselsäuren wie pyrogene Kieselsäuren, Fällungskieselsäuren, Schichtsilikaten, Alkoxysilanen, modifizierte Alkoxysilanen, insbesondere $Si(OR)_4$ mit R = organischer Rest hier vorzugsweise Tetraethoxysilan, TEOS, $Si(OEt)_4$ und

 a) ohne Lösungsmittelaustausch
 b) durch unterkritische Trocknung
 c) unter zu Hilfenahme von organischen Monomeren, die Monomere für Epoxide sind, und die löslich oder dispergierbar in polar protischen Lösemitteln vorzugsweise Mischungen von Wasser und einem Alkohol, hier vorzugsweise Ethanol, und einem organisch modifizierten Alkoxysilan der allg. Formel $R_nSi(OR')_{4-n}$, mit n = 0-3; R, R' = organische Reste, sind, die der Ausgangslösung, der Sol-Phase oder nach begonnener Gelierung zugesetzt werden, so dass der Massenanteil der organischen Komponente höchstens 20% der silicatischen Komponente beträgt, insbesondere höchstens 15%, bevorzugt aber höchstens 8% beträgt

d) und die nach der Trocknung bei 1 bar einer Pyrolyse unterzogen werden, die oberhalb von 300 °C unter sauerstofffreier Atmosphäre durchgeführt wird, sowie anschließend einer oxidativen Temperaturbehandlung oberhalb 300°C unterzogen werden,

hergestellt wird,

wobei das Verfahren die folgenden Schritte umfasst:

Durchführen des Sol-Gel-Prozesses, wobei während der Gelierung ein $SiO_2$-Netzwerk (1) zusammen mit organischen Partikeln (2) gebildet wird, wobei die organischen Partikel (2) während der Gelierung aus den organischen Monomeren gebildet werden, und kovalent an das $SiO_2$-Netzwerk (1) gebunden sind, und

Durchführen der Trocknung, der Pyrolyse und der oxidativen Temperaturbehandlung, wobei dadurch die organischen Partikel (2) aus dem Gelgerüst weitestgehend entfernt werden, so dass Fehlstellen (4) im $SiO_2$-Netzwerk (1) entstehen, wobei der entstandene Kohlenstoffrest (5) in einer Menge von weniger als 10% im resultierenden $SiO_2$-Xerogel vorhanden ist.

2. Verfahren nach Anspruch 1, **dadurch gekennzeichnet, dass** die Monomere oder deren Gemische im gleichen Temperaturbereich und/oder im gleichen pH-Bereich wie das anorganische Netzwerk polymerisieren bzw. -kondensieren durch Einstellung des pH-Wertes und der Temperatur.

3. Verfahren nach einem der Ansprüche 1 oder 2, **dadurch gekennzeichnet, dass** der Reaktionslösung sowohl Katalysatoren-Zusätze als auch Lösungsvermittler und im Falle radikalischer Polymerisation auch Radikalstarter zugesetzt werden.

4. Verfahren nach einem der Ansprüche 1 bis 3, **dadurch gekennzeichnet, dass** ein Faseranteil kleiner als 5 Gew.-% eingebracht wird.

5. Verfahren nach einem der Ansprüche 1 bis 4, **dadurch gekennzeichnet, dass** die Einbringung von Monomeren, Pigmenten, Fasern und weiteren Zusätzen nach begonnener Gelierung des silikatischen Netzwerks durch Ultraschallbehandlung oder Verscheerung durchgeführt wird.

**Claims**

1. Method for producing a $SiO_2$ xerogel with pores ranging from 1000 nm to 50 nm, a density less than 400 kg/m$^3$, **characterised in that** the $SiO_2$ xerogel is produced by way of a sol-gel process from a silicon compound, in particular sodium silicate, silicas such as pyrogenic silicas , precipitated silicas, layered silicates, alkoxysilanes, modified alkoxysilanes, in particular $Si(OR)_4$, where R = organic residue, here preferably tetraethoxysilane TEOS, $Si(OEt)_4$ and

   a. without solvent exchange
   b. by means of subcritical drying
   c. with the aid of organic monomers which are monomers for epoxides, and which are soluble or dispersible in polar protic solvents, preferably mixtures of water and an alcohol, here preferably ethanol, and an organically modified alkoxysilane having the general formula $R_nSi(OR')_{4-n}$, where n = 0-3; R, R' = organic residues, which are added to the starting solution, the sol phase or after commencement of gelification, such that the organic component content by weight of the silicate component is 20% at most, in particular 15% at most, preferably however 8% at most
   d. and which after the drying at 1 bar is subjected to a pyrolysis, which is carried out in excess of 300°C in an oxygenated atmosphere, and subsequently to an oxidative heat treatment in excess of 300°C,

   wherein the method comprises the following steps:

   carrying out the sol-gel process, wherein during the gelification an $SiO_2$ network (1) is formed together with the organic particles (2), wherein during the gelification the organic particles (2) are formed from the organic monomers, and are linked to the $SiO_2$ network (1) covalently, and

carrying out the drying, the pyrolysis and the oxidative heat treatment, wherein these cause the organic particles (2) to be removed as far as possible from the gel structure, so that imperfections (4) arise in the $SiO_2$ network (1), wherein the carbon residue (5) which has been formed is present in a quantity of less than 10% in the resulting $SiO_2$ xerogel.

**2.** Method according to claim 1, **characterised in that** the monomers or mixtures thereof polymerise or condense as a result of setting the pH value and the temperature in the same temperature range and/or in the same pH range as the inorganic network.

**3.** Method according to one of claims 1 or 2, **characterised in that** both catalyst additives and also solubilisers and in the case of radical polymerisation also radical starters are added to the reaction solution.

**4.** Method according to one of claims 1 to 3, **characterised in that** a fibre content of less than 5% by weight is incorporated.

**5.** Method according to one of claims 1 to 4, **characterised in that** the incorporation of monomers, pigments, fibres and further additives is carried out after commencement of gelification of the silicate network by means of ultrasound treatment or fragmentation.

## Revendications

**1.** Procédé pour la préparation d'un xérogel à base de $SiO_2$ comprenant des pores dans la plage de 1000 nm à 50 nm, une masse volumique inférieure à 400 kg/m$^3$, **caractérisé en ce qu'**on prépare le xérogel à base de $SiO_2$ via un procédé sol-gel à partir d'un composé de silicium, en particulier du silicate de potassium, des acides siliciques tels que des acides siliciques pyrogènes, des acides siliciques de précipitation, des silicates stratifiés, des alcoxysilanes, des alcoxysilanes modifiés, en particulier du $Si(OR)_4$ dans lequel R représente un résidu organique, en l'occurrence de préférence du tétraéthoxysilane, du TEOS, du $Si(OEt)_4$, et

    a) en l'absence d'échange de solvants ;
    b) via un séchage subcritique ;
    c) avec le concours de monomères organiques, qui représentent des monomères pour des époxydes, et qui sont solubles ou aptes à être dispersés dans des solvants protiques polaires, de préférence des mélanges d'eau et d'un alcool, en l'occurrence de préférence l'éthanol, et d'un alcoxysilane soumis à une modification de type organique répondant à la formule générale $R_nSi(OR')_{4-n}$, dans laquelle n est égal à 0 - 3 ; R, R' représentent des résidus organiques, que l'on ajoute à la solution de départ, à la phase de sol ou une fois que la gélification s'est entamée, d'une manière telle que la fraction massique des composants organiques s'élève au maximum à 20 % des composants silicatés et, en particulier au maximum à 15 %, mais de préférence au maximum à 8 % ;
    d) et que l'on soumet après le séchage sous une pression de 1 bar à une pyrolyse que l'on met en oeuvre à une température supérieure à 300 °C sous atmosphère exempte d'oxygène, et que l'on soumet ensuite à un traitement thermique par oxydation à une température supérieure à 300 °C ;

le procédé comprenant les étapes suivantes dans lesquelles :

    on met en oeuvre le processus sol-gel, un réseau de $SiO_2$ (1) se formant de manière conjointe avec des particules organiques (2) au cours de la gélification, les particules organiques (2) étant obtenues au cours de la gélification à partir des monomères organiques et se liant de manière covalente au réseau de $SiO_2$ (1) ; et on met en oeuvre le séchage, la pyrolyse et le traitement thermique par oxydation, ce qui donne lieu à une élimination dans une très large mesure des particules organiques (2) à partir du squelette de gel, si bien que l'on obtient des lacunes (4) dans le réseau de $SiO_2$ (1), le résidu de carbone (5) obtenu étant présent en une quantité inférieure à 10 % dans le xérogel résultant à base de $SiO_2$.

**2.** Procédé selon la revendication 1, **caractérisé en ce que** les monomères ou leurs mélanges polymérisent, respectivement se condensent dans la même plage de températures et/ou dans la même plage de pH que celles du réseau inorganique par un réglage de la valeur du pH et de la température.

**3.** Procédé selon l'une quelconque des revendications 1 ou 2, **caractérisé en ce que** l'on ajoute à la solution réactionnelle aussi bien des additifs de catalyseurs que des agents de solubilisation et, dans le cas d'une polymérisation radicalaire, également des initiateurs radicalaires.

4. Procédé selon l'une quelconque des revendications 1 à 3, **caractérisé en ce qu'**on incorpore une fraction de fibres inférieure à 5 % en poids.

5. Procédé selon l'une quelconque des revendications 1 à 4, **caractérisé en ce qu'**on met en oeuvre l'incorporation des monomères, des pigments, des fibres et des autres additifs une fois que la gélification du réseau silicaté a démarré, par traitement aux ultrasons ou par cisaillement.

Abbildung 1

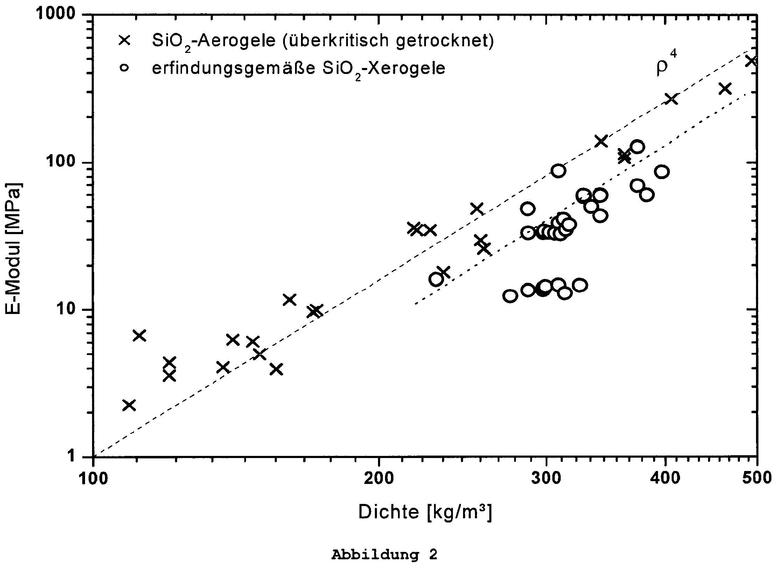

Abbildung 2

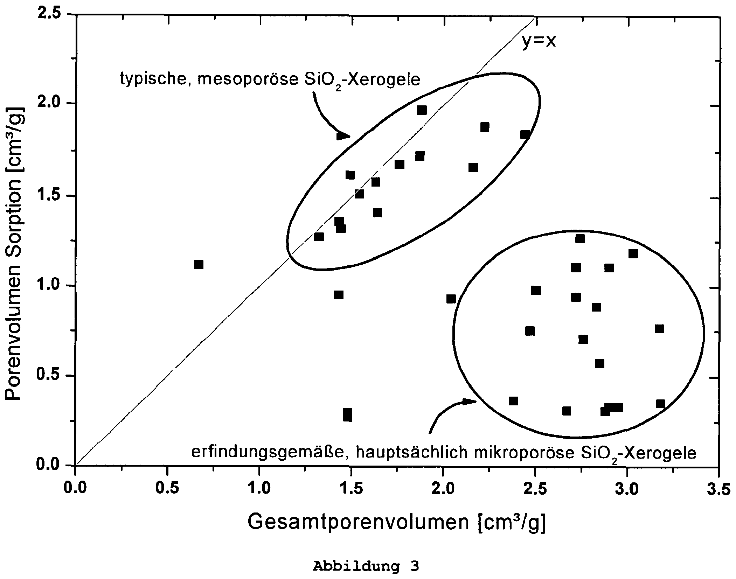

Abbildung 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005068361 A
- EP 0690023 A2
- WO 001998005591 A1
- WO 001996022942 A1
- JP 000301 A

- DE 19721600 A1
- WO 9805591 A1
- FR 2833936 A1
- DE 3346180 C2


**In der Beschreibung aufgeführte Nicht-Patentliteratur**

- **EINARSRUD, M.A. ; E. NILSEN ; A. RIGACCI ; G.M. PAJONK ; S. BUATHIER ; D. VALETTE ; M. DURANT ; B. CHEVALIER ; P. NITZ ; F. EHR-BURGER-DOLLE.** Strengthening of silica gels and aerogels by washing and aging processes. *Journal of Non-Crystalline Solids,* 2001, vol. 285, 1-7

- **LARSEN GUSTAVO et al.** Amine dendrimers as templates for amorphous silicas. *of-fenbart einen Prozess für die Herstellung von Xerogelen, bei dem Amin-Dendrimere als Vorlage benutzt werden*
- *Journal of Physical Chemistry. B, Materials, Surfaces, Interfaces and Biophysical,* 01. Januar 2000, vol. 104 (20), 4840-4843